# EUROPEAN PATENT APPLICATION

(11) **EP 3 181 973 A1**
(43) Date of publication of application: **21.06.2017**
(21) Application number: 15200316.6
(22) Date of filing: 16.12.2015
(51) Int. Cl.: F16L 21/025, F16L 33/22

(54) **SUPPORT LINER FOR A CONNECTION BETWEEN A TUBE END AND A MECHANICAL COUPLING DEVICE**

(71) Applicant: Raufoss Water & Gas AS, 2831 Raufoss (NO)
(72) Inventor: Bossum, Tor Heine, 2850 Lena (NO); Ølstad, Lars Kristian, 2819 Gjøvik (NO)
(74) Representative: Plougmann Vingtoft a/s

(57) **Abstract**

The present invention relates to support liner (3) for strengthening a connection between a tube end (4) and a mechanical coupling device (5). The support liner (3) comprises a tubular part (12) to be inserted into the tube end (4) and a protruding part (13) to extend outside the tube end (4). The tubular part (12) comprises an annular groove (15) located on an outer surface (16) and extending in a longitudinal direction of the tubular part (12). The annular groove (15) comprises a conical section (19) or a step (21), so that an O-ring (14) arranged in the groove (15) will be moved along the conical section (19) or up the step (21) of the groove (15) and thereby compressed as the support liner (3) is inserted into the tube end (4). Hereby a sealing is formed between an inner surface (11) of the tube end (4) and the outer surface (16) of the support liner (3) via the compressed O-ring (14). The O-ring (14) is preferably moved by rolling.

## Description

### FIELD OF THE INVENTION

The present invention relates to support liners for strengthening the connection between a tube end and a mechanical coupling device. The invention also relates to a method of establishing such a connection.

### BACKGROUND OF THE INVENTION

In a large number of areas of application, tubes are to be connected with a mechanical coupling device; examples are for drinking water, potable water, hot water and gas distribution. Many of these connections will be dug down into the ground and others are in houses or buildings. These are generally applications where leakages are not wanted and can result in big disasters or expensive repairs. Support liners are therefore used to give extra strength and safety to the connections so that the tube cannot be pulled out from the coupling device. This means that if you try to pull the tube out of the coupling device, the tube itself is always the weakest point.

When support liners are used to strengthen a connection between a tube and a mechanical coupling device, and where there is a tight fit between the support liner and the tube, either large assembly forces may need to be applied or lubrication is used to ease the assembly. However, for some applications the use of lubrication is disadvantageous due to the risk of the lubrication leaking into the system. This may e.g. be the case in the medical industry, in food or drinking water applications, within health care, and in some areas of space or aerospace industry. For such applications the alternative is then to ensure very small tolerances on the dimensions of the parts to be assembled possibly resulting in increased cost and/or only a limited number of suppliers being available; this again potentially leading to increased cost.

Some support liners on the market today have sealing O-rings for sealing inside the tube. These are typically made for complete systems where one manufacturer delivers the tubes, the coupling devices and the support liners so they are made to match. This is mostly for smaller dimension (<28mm) PEX-tubes and so called Alu-PEX (PEX-tubes with aluminium barrier layer for improved sealing against diffusion) for indoor applications. Here the manufacturers have control over the tolerances of the tube, which for these tubes are better than for general purpose PE and PEX tubes. Some of these suppliers even deliver tools for straightening and chamfering the tube ends before assembly to prevent damages to the O-ring.

For some areas of application, the acceptable tolerances on the internal diameter of a tube is quite large. An example is for a tube with outside diameter of 32 mm which has 0.3 mm outside diameter tolerance and 1.1 mm inside diameter tolerance; this is according to EN12201 for water tubes and EN1555 for gas tubes. In general, to ensure a good sealing by use of a normal O-ring sealing, the O-ring has to slide against the sealing surface. For assembly of a support liner and a tube end allowing for so large tolerances on the inner diameter of the tube as mentioned, it is necessary to have chamfered or rounded edges to prevent the O-ring from being damaged during the assembly of the parts. This is especially the case when the O-ring needs to be heavily compressed, which will be the case when the tube is on the lower diameter tolerance. For the tubes of maximum inner diameter, there is a risk of too little compression of the O-ring and resulting leakage.

Hence, an improved support liner would be advantageous and in particular, a more efficient and/or reliable support liner would be advantageous.

### OBJECT OF THE INVENTION

It is an object of the invention to provide a support liner with which a fluid tight connection can be ensured with larger tolerances on the diameter of the tube end.

It is another object of the invention to provide a support liner with which the mounting process can be made more efficient than with prior art solutions.

It is another object of the invention to provide a support liner with which the risk of leakage of fluid flowing in the tube can be lowered compared to prior art.

It is a further object of the present invention to provide an alternative to the prior art.

In particular, it may be seen as an object of the present invention to provide a support liner that solves the above-mentioned problems of the prior art.

### SUMMARY OF THE INVENTION

Thus, the above-described object and several other objects are intended to be obtained in a first aspect of the invention by providing a support liner for strengthening a connection between a tube end and a mechanical coupling device, the support liner comprising:
- a tubular part adapted to be inserted into the tube end, and
- a protruding part adapted to extend outside and adjacent the tube end arranged in the mechanical coupling device when the connection has been established,
wherein the tubular part comprises an annular groove located on an outer surface and extending in a longitudinal direction of the tubular part, the annular groove having a first end and a second end and comprising:
- a conical section along at least a part of the groove, and/or
- a first step formed by a steep increase in outer diameter at a first distance from the first end of the groove, the first distance being so that the O-ring can be retained between the first end of the groove and the first step,
so that an outer diameter of the support liner is larger at the second end than at the first end, and
so that when an O-ring is initially arranged in the first end of the groove, the O-ring will be moved from the first end to the second end as the support liner is inserted into the tube end, and the O-ring is hereby compressed to form a sealing between an inner surface of the tube end and the outer surface of the support liner via the compressed O-ring.

By "tube end" is preferably meant the part of the tube being supported by the support liner. This is also typically the part of the tube which is connected with the mechanical coupling device. However, the support liner may extend over a longer part of the tube if considered appropriate.

What is referred to as "tube" in the present description, could also be called "pipe".

A characteristic of the present invention is that the sealing is established against the inner surface of the tube instead of against the outer surface which is the case for most known connections. The main benefit of sealing inside the tube is that the sealing surface is very well protected against scratches and dents compared to the outside. Especially for old tubes that have been lying in the ground for some time, it is a challenge to seal on the outside because the surfaces have been exposed to the gravel and crushed stone in the ground. This might have caused scratches that even compression fittings cannot seal against. With the sealing inside of the tube as in the present invention, even push-in couplings will work well even without huge forces to compress the sealing against the tube wall. Especially by repair on water and gas installations, this will be very time saving and give better safety than with known solutions.

In presently preferred embodiments of the invention, a surface roughness of the support liner along the annular groove and the mutual dimensions of the tube end, the support liner and the O-ring are so that an O-ring arranged therein will be rolled along the annular groove, when the support liner is inserted into the tube end. The actual surface roughness for a given connection will be material dependent and will also depend on the inner diameter of the tube end, the outer varying diameter of the groove, and the size of the O-ring.

In embodiments having a conical section, the conical shape of the groove means that the O-ring is gradually compressed. As will be explained in further details in relation to the figures, only a small amount of compressive forces is necessary to start the rolling movement. This means that the traditional risk of damaging the O-ring during mounting if the edges of the tube end are not chamfered is significantly reduced or removed. Hereby the traditional steps of chamfering and lubricating can be omitted whereby a more efficient process of assembly is obtained and the risk of undesired leaking of lubricants into the system can be avoided.

In embodiments having a first step, it can hereby be ensured that the O-ring stays in the desired position after arrangement in the groove until use and during the first part of the insertion into the tube end. The outer diameter of the section between the first end and the steep increase will typically, but not necessarily, be constant. When the support liner is being inserted into the tube end, there should be some compression of the O-ring in the position between the first end of the groove and the first step to ensure the rolling behaviour.

A main advantage of sealing against an inner surface instead of against an outer surface of the tube end is that the risk of leakage can be significantly lowered. This is particularly advantageous for tubes which have been pulled a certain distance above ground with a high risk of being damaged by stones and sand. The resulting scratches constitute a risk of leakage if a sufficient sealing cannot be obtained. Such leakage may not even be realized until the tubes have been dug into the ground resulting in significant cost and trouble in the detection and repair work.

For some applications, the tube is made from a material, such as polyethylene, that has a natural oily or greasy feeling and a rather slippery surface compared to the materials considered most interesting for use in the support liner; see below. For such tube materials, it is an important issue not to use any kind of lubrication on the O-ring or the surrounding parts as this will prevent the intended rolling functionality. The rolling of the O-ring is critical to ensure that the O-ring moves to the correct location in its groove during the assembly of the tube end and the mechanical coupling device.

The alternative of having a support liner which slides along at least a part of the annular groove and thereby is compressed is also considered to be covered by the present invention even though it is at present considered most advantageous to have the O-ring moved by a rolling movement only.

In some embodiments of the invention, the groove comprises a section of constant diameter adjacent the first end and/or adjacent the second end. Hereby a stable position for the O-ring is obtained. Furthermore, the force on the O-ring is mainly in the radial direction of the tube.

To ensure a rolling movement only, it may be necessary to ensure that the surfaces to be assembled are clean and dry. Problems might occur with old tubes as they are often covered inside by biological residues. In case this causes problems with the frictional behaviour on this contaminant, it may be necessary to use an efficient way to remove it safely in the tube end where the support liner is to be attached.

In presently preferred embodiments of the invention, a width of the groove may be at least twice as large as a thickness of the O-ring it is adapted to have arranged therein during use of the support liner. By "thickness of the O-ring" is meant the diameter of the thread forming the O-ring. The width may in some embodiments be at least three times the thickness of the O-ring, such as at least four times the thickness of the O-ring. The width of the groove is related to how much movement along the groove that will take place while establishing the compression of the O-ring.

The groove may comprise a second step formed by a steep decrease in outer diameter at a second distance from the second end, the second distance being so that the O-ring can be retained in a compressed state between the second step and the second end of the groove. Hereby it can be ensured that the O-ring stays in the correct position after the connection has been established.

The angle of inclination of the conical section, when present, with respect to the longitudinal direction of the tubular part may be between 5° and 40°, such as between 5° and 20°, preferably between 5° and 10°. Which angle of inclination to use for a given connection may be established by experimentation and/or by computer simulations. Further information on possible dimensions and geometries will be given in the detailed description of the figures.

The protruding part of the support liner may comprise a circumferential further groove on an outer surface, the further groove being adapted to have a further O-ring arranged therein. This is particularly relevant when the connection is established with tubes comprising scratches on the outer surface. Such scratches mean that it may not be possible to establish a fluid tight connection between the outer surface of the tube and the mechanical coupling device. The purpose of the further O-ring is therefore to establish a sealing between the support liner and an inner surface of the mechanical coupling device and thereby prevent the fluid flowing in the tube from flowing out via leakages in the connection. This will be more clearly shown in the figures.

In some embodiments of the invention, an inner surface of the tubular part is shaped so that an inner diameter of the support liner first decreases and then increases when going from an end face at the protruding part towards an opposite end face at the tubular part. Hereby a venturi-effect is obtained resulting in a smaller pressure loss across the support liner. The presence of the annular groove in the support liner makes it necessary to use a slightly larger wall thickness of the tubular part compared to known support liners without such a groove. The small resulting increase in pressure loss is counteracted by the varying inner diameter so that the total change in pressure loss as compared to a traditional support liner is considered to be non-existing or so small that it is without any influence on the overall performance of the connection.

A support liner as described above may be made from metal, polymer or fibre reinforced polymer. An example of such a material is PA12 with 65% glass reinforcement. The main criteria to consider is the frictional behaviour against the O-ring. It is expected that only very few special low friction materials can create special problems here, like PTFE and graphite or graphite filled materials. The material of the O-ring can e.g. be NBR, EPDM and FKM, and the hardness can vary between typically 50 to 70 Shore A. Other interesting O-ring materials may be silicone rubber and PUR.

In a second aspect, the present invention relates to a method of establishing a fluid tight connection between a tube end and a mechanical coupling device, the method comprising:
- providing a tube with a tube end and a mechanical coupling device to be connected,
- providing a support liner according to any of the preceding claims,
- arranging an O-ring in the first end of the groove of the support liner,
- inserting the support liner into the tube end so that the O-ring is moved from the first end to the second end of the groove, and
- connecting the tube end to the mechanical coupling device.

When the method comprises using a support liner having a further groove as described above, the method may further comprise the step of arranging a further O-ring in the further groove before the connection is established.

The first and second aspects of the present invention may be combined. These and other aspects of the invention will be apparent from and elucidated with reference to the embodiments described hereinafter.

### BRIEF DESCRIPTION OF THE FIGURES

The support liner according to the invention will now be described in more detail with regard to the accompanying figures. The figures show one way of implementing the present invention and is not to be construed as being limiting to other possible embodiments falling within the scope of the attached claim set.
Figure 1 shows schematically and in cross sectional view a traditional use of an O-ring.
Figure 2 shows a cross sectional view of a possible design of a known support liner used in a known connection between a tube and a mechanical coupling device.
Figure 3 shows a cross sectional view of the same connection as in figure 2 but with a support liner according to the present invention.
Figure 4 shows schematically how the O-ring is moved along the groove when the support liner is inserted into the tube end. Figure 4.a shows the position where the tube end first engages with the O-ring and starts the compression thereof. Figure 4.b shows the position where the support liner has been fully inserted into the tube end and the O-ring has moved from the first end to the second end.
Figure 5 shows a cross-section of the O-ring and shows schematically the area of attack of the tube end which will result in a movement of the O-ring.
Figure 6 shows schematically four different designs of the cross section of the groove.

### DETAILED DESCRIPTION OF AN EMBODIMENT

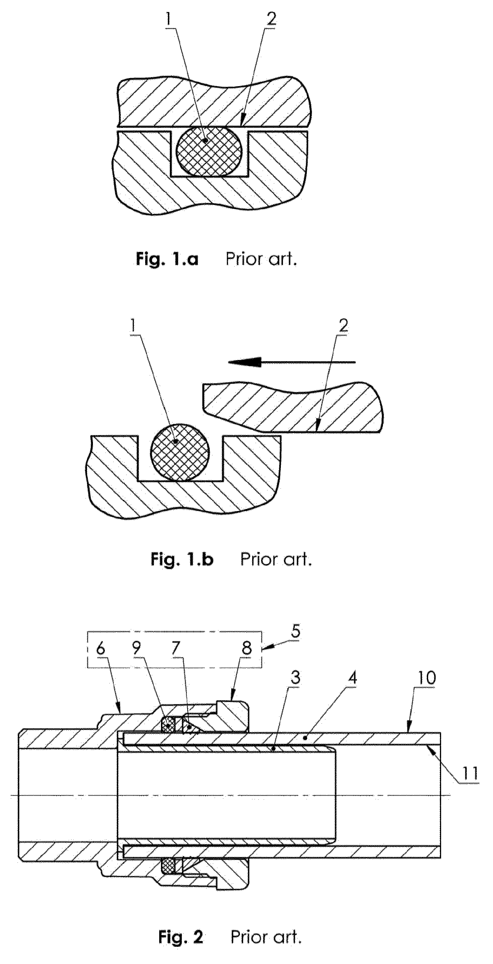

Most known sealing connections established by use of O-rings are based on the O-ring being kept in a substantially fixed position, typically in a groove, and a sliding action between the O-ring and the surface against which it is to seal. Such an example is shown schematically in figure 1.a. In order to establish such a connection without damaging the O-ring 1 during the assembly, the edges of the sliding surface 2 must be rounded or chamfered as shown in figure 1.b. In relation to the assembly of tubes and mechanical coupling devices, this may require an additional step which may also be difficult to perform, if the tube is e.g. a water pipe already arranged underground. The present invention differs from this overall principle in that the O-ring is intended to be moved along a groove during the establishment of the sealing as will be explained in the following.

Support liners are used to strengthen the connection between a tube end and a mechanical coupling device. Figure 2 shows a cross sectional view of a possible design of a known support liner 3 used in a connection between a tube end 4 and a mechanical coupling device 5. The mechanical coupling device 5 that comprises a body 6, a clamp ring 7, a nut 8, and an O-ring 9 for sealing against the outer surface 10 of the tube end 4. In the embodiment shown, a support liner 3 has been inserted into the tube end 4 before assembly with the mechanical coupling device 5 in order to strengthen the connection.

A typical assembly of the connection as shown in figure 2 can be performed by two different methods, based on which type of mechanical coupling device 5 is used. If the mechanical coupling device 5 is a push-in coupling, the following method is used:
1. Put the support liner 3 into the tube end 4.
2. Put the tube end 4 with the support liner 3 into the mechanical coupling device 5 according to specifications made by the manufacturer of the mechanical coupling device 5.

If the mechanical coupling device 5 is a screw compression coupling, the following method is used:
1. Put the support liner 3 into the tube end 4.
2. Put the tube end 4 with the support liner 3 into the mechanical coupling device 5.
3. Tighten the nut 8 with a spanner or wrench (not shown) according to specifications made by the manufacturer of the mechanical coupling device 5.

If a support liner 3 is not used, the tube end 4 shrinks in diameter during huge pull forces. When the tube end 4 shrinks, the clamp ring 7 inside the mechanical coupling device 5 will at a certain level not be able to maintain the grip on the tube end 4 as the tube end 4 at a this level becomes smaller in diameter than the inside of the clamp ring 7. At this level, the tube end 4 slips out of the mechanical coupling device 5. The purpose of the support liner 3 is thus to prevent the tube end 4 from shrinking in diameter inside the mechanical coupling device 5 when stretched by huge pull forces. Since the support liner 3 is made of a relatively stiff material compared to the tube, it will force the tube end 4 to maintain its initial diameter inside the mechanical coupling device 5. Hence, the clamp ring 7 will at any time be able to grip the tube end 4 and hold it in place. The weakest point in this connection is always the tube itself somewhere outside the mechanical coupling device 5. The support liner 3 thus gives an extra strength and safety to the connection in the way that the tube end 4 cannot be pulled out from the mechanical coupling device 5.

A problem with a support liner 3 as shown in figure 2 is that it only works with narrow dimensional tolerances on the inner diameter of the tube as explained above. There are already support liners 3 on the market with sealing on the inside of the tube using a sliding O-ring to allow for small diameter variations, but mostly on smaller dimensions as described above. The problem of using a traditional support liner 3 is the need of chamfering of the tube end 4 to allow the O-ring 1 to slide into the tube end 4. However, due to the large inner diameter tolerance of the typical water pipes, it requires a lot of force to assemble a support liner 3 when the tube is at minimum size or if it has been damaged so that it is no longer fully circular. Therefore, some suppliers of tubes also deliver tools for straightening and chamfering the tube ends 4 before assembly to prevent damages to the O-ring 1.

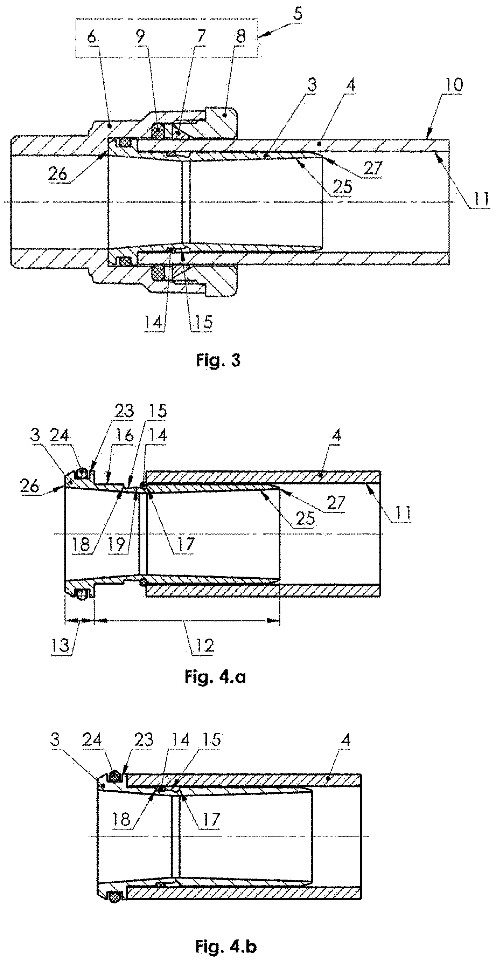

Figure 3 shows a cross sectional view of the same connection as in figure 2 but with a support liner 3 according to the present invention. As shown in figure 4.a, the support liner 3 comprises a tubular part 12 adapted to be inserted into the tube end 4, and a protruding part 13 adapted to extend outside and adjacent the tube end 4 arranged in the mechanical coupling device 5 when the connection has been established. The functioning of a support liner 3 according to the present invention will be described in further details in the following.

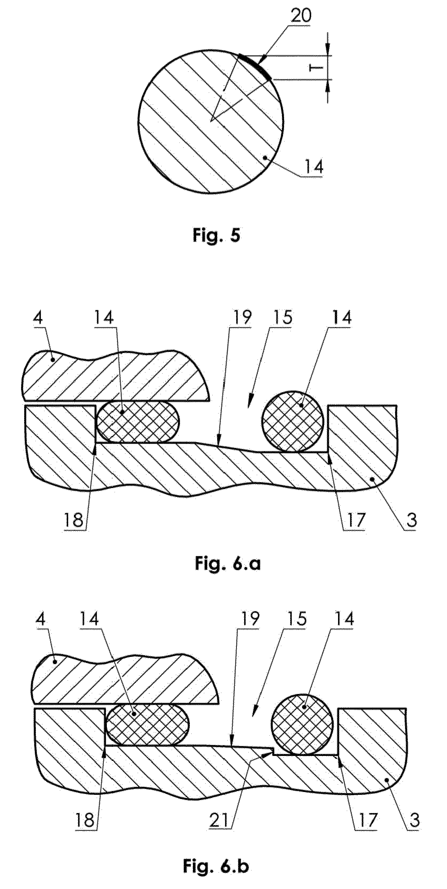

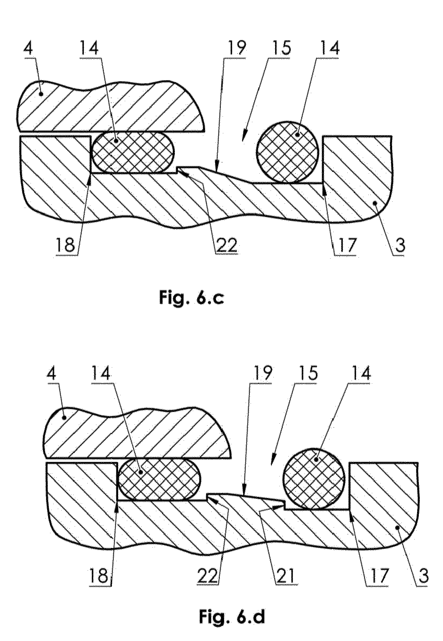

Figure 4 shows schematically how the O-ring 14 is moved along the groove 15 when the support liner 3 is inserted into the tube end 4. Reference number 14 is used here and in the following for an O-ring used in combination with a groove 15 in accordance with the present invention. The tubular part 12 comprises an annular groove 15 located on an outer surface 16 and extending in a longitudinal direction of the tubular part 12. The annular groove 15 has a first end 17 and a second end 18. In the embodiments shown in figure 4, the groove 15 comprises a conical section 19 along at least a part of the groove 15; this conical section 19 is more clearly seen in figure 6. Figure 4.a shows the position where the tube end 4 first engages with the O-ring 14 and starts the compression thereof. Figure 4.b shows the position where the support liner 3 has been fully inserted into the tube end 4 and the O-ring 14 has moved from the first end 17 to the second end 18. As seen in figures 4.a and 4.b, an outer diameter of the support liner 3 is larger at the second end 18 than at the first end 17. Thereby it is obtained that when an O-ring 14 is initially arranged in the first end 17 of the groove 15, as in figure 4.a, the O-ring 14 will be moved from the first end 17 to the second end 18, as in figure 4.b, when the support liner 3 is inserted into the tube end 4. Hereby the O-ring 14 is compressed to form a sealing between an inner surface 11 of the tube end 4 and the outer surface 16 of the support liner 3 via the compressed O-ring 14.

In a preferred embodiment of the invention, the surface roughness of the support liner 3 along the annular groove 15 and the mutual dimensions of the tube end 4, the support liner 3, and the O-ring 14 are so that an O-ring 14 arranged therein will be rolled along the annular groove 15, when the support liner 3 is inserted into the tube end 4.

Figure 5 shows a cross-section of an O-ring 14 to be arranged in a groove 15 as described above. As shown schematically in figure 5, the point of attack of the tube end 4 on the O-ring 14 may be anywhere along the marked area 20 to make the O-ring 14 start the rolling movement along the groove 15. This illustrates that the tolerances T on the inner diameter of the tube end 4 can be relatively large without influencing the function of the O-ring 14 and without damaging it. If a traditionally fixed O-ring and a mutual sliding movement had been used, a lower point of attack - corresponding to a small inner diameter of the tube - would have caused significant damage to the O-ring.

Figure 6 shows schematically four different designs of the cross section of the groove 15 of a support liner 3 according to the invention. In all of the illustrated embodiments, the groove 15 comprises a section of constant diameter adjacent the first end 17 and/or adjacent the second end 18. However, the scope of protection also covers embodiments without such a section of constant diameter. In all of the illustrations in figure 6, two O-rings 14 are shown. This is just for illustration of the compression of the O-ring 14; only one O-ring 14 is arranged in the groove 15. In the embodiment in figure 6.a, the groove 15 comprises a conical section 19 but no steps. In the embodiment in figure 6.b, the groove 15 comprises a first step 21 formed by a steep increase in outer diameter at a first distance from the first end 17 of the groove 15 when going from the first end 17 and towards the conical section 19. The first distance is so that the O-ring 14 can be retained between the first end 17 of the groove 15 and the first step 21. Hereby the O-ring 14 can be kept in the correct position until use and during the first part of the insertion of the support liner 3 into the tube end 4.

Figure 6.c shows an embodiment wherein the groove 15 comprises a second step 22 formed by a steep decrease in outer diameter at a second distance from the second end 18. The second distance is so that the O-ring 14 can be retained in a compressed state between the second step 22 and the second end 18 of the groove 15. Hereby the O-ring 14 can be kept in the correct position after assembly. Furthermore, the second step 22 may provide a certain feedback to tell the person performing the connection that the O-ring 14 has been moved to the correct position. It will also be possible to have a step both at the first end 17 and at the second end 18; such an embodiment is shown in figure 6.d. It will also be possible to have a groove 15 with one or two steps as described but with no conical section 19.

The angle of inclination of the conical section with respect to the longitudinal direction of the tubular part is typically between 5 and 40°, such as between 5 and 20°, preferably between 5 and 10°. The width of the groove 15, i.e. the distance from the first end to the second end, is at least twice as large as a thickness t of the un-deformed O-ring it is adapted to have arranged therein during use of the support liner. It may typically be specified as being 3.5*t ±35%. The depth of the groove at the first end is typically in the order of 0.7*t ±20%; and the depth of the groove at the second end is typically in the order of 0.55*t ±30%. However, other angles of inclination and dimensions are also covered by the scope of the invention.

The support liners 3 according to the present invention may be made by the same methods as presently used for making known support liners. If they are made from metals, they are normally machined in a lathe from bolts or tubes. The ones made from plastic materials are normally injection moulded, but some are also machined as the ones made of metals. The groove 15 of a support liner 3 according to the present invention can in principal be machined on an existing support liner, if the wall thickness is big enough. However, the known support liners may have a wall thickness which is very small to prevent flow restrictions. Therefore, the new support liners may more efficiently be made as new components and not by modifying existing components. Other manufacturing methods may become more relevant in the future, such as 3D printing.

As shown in figure 4, the protruding part 13 of the support liner 3 may comprise a circumferential further groove 23 on an outer surface, the further groove 23 being adapted to have a further O-ring 24 arranged therein. As explained above, the purpose of this further O-ring 24 is to ensure a fluid tight connection even if the outer surface 10 of the tube end 4 contains scratches, such as from the tube being pulled across a stony surface during installation. With the further O-ring 24, leakage from the inner of the tube is prevented by the sealing established between the support liner 3 and the mechanical coupling device 5 as shown in figure 3.

In the embodiment in figures 3 and 4, an inner surface 25 of the support liner 3 is shaped so that an inner diameter of the support liner 3 first decreases and then increases when going from an end face 26 at the protruding part 13 towards an opposite end face 27 at the tubular part 12. Hereby a venturi-effect is obtained resulting in a smaller pressure loss across the support liner 3.

To summarize, a support liner 3 as described above is used to establish a fluid tight connection between a tube end 4 and a mechanical coupling device 5 in the following way: A tube with a tube end 4 and a mechanical coupling device 5 to be connected are provided. A support liner 3 is provided and an O-ring 14 is arranged in the first end 17 of the groove 15 of the support liner 3. The support liner 3 may be supplied directly from the manufacturer with this O-ring 14 already arranged in the groove 15, or it may have to be arranged as part of the assembly process. The support liner 3 is then inserted into the tube end 4 so that the O-ring 14 is moved from the first end 17 to the second end 18 of the groove 15. Hereby the O-ring 14 is compressed to provide a fluid tight connection between the support liner 3 and the inner surface 11 of the tube end 4 as described above. The tube end 4 is then connected to the mechanical coupling device 5 in a manner known to the person skilled in the art. When the support liner 3 used has a further groove 23 as shown in figure 3 and described above, the method may further comprise the step of arranging a further O-ring 24 in the further groove 23 before the connection is established. As for the other O-ring 14, this further O-ring 24 may be pre-arranged by the supplier and provided to the end-user together with the support liner 3.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steeps. In addition, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Support liner (3) for strengthening a connection between a tube end (4) and a mechanical coupling device (5), the support liner (3) comprising:
- a tubular part (12) adapted to be inserted into the tube end (4), and
- a protruding part (13) adapted to extend outside and adjacent the tube end (4) arranged in the mechanical coupling device (5) when the connection has been established,
wherein the tubular part (12) comprises an annular groove (15) located on an outer surface (16) and extending in a longitudinal direction of the tubular part (12), the annular groove (15) having a first end (17) and a second end (18) and comprising:
- a conical section (19) along at least a part of the groove (15), and/or
- a first step (21) formed by a steep increase in outer diameter at a first distance from the first end (17) of the groove (15), the first distance being so that the O-ring (14) can be retained between the first end (17) of the groove (15) and the first step (21),
so that an outer diameter of the support liner (3) is larger at the second end (18) than at the first end (17), and
so that when an O-ring (14) is initially arranged in the first end (17) of the groove (15), the O-ring (14) will be moved from the first end (17) to the second end (18) as the support liner (3) is inserted into the tube end (4), and the O-ring (14) is hereby compressed to form a sealing between an inner surface (11) of the tube end (4) and the outer surface (16) of the support liner (3) via the compressed O-ring (14).

2. Support liner (3) according to claim 1, wherein a surface roughness of the support liner (3) along the annular groove (15) and the mutual dimensions of the tube end (4), the support liner (3), and the O-ring (14) are such that an O-ring (14) arranged therein will be rolled along the annular groove (15), when the support liner (3) is inserted into the tube end (4).

3. Support liner (3) according to claim 1 or 2, wherein the groove (15) comprises a section of constant diameter adjacent the first end (17) and/or adjacent the second end (18).

4. Support liner (3) according to any of the preceding claims, wherein a width of the groove (15) is at least twice as large as a thickness (t) of the O-ring (14) it is adapted to have arranged therein during use of the support liner (3).

5. Support liner (3) according to any of the preceding claims, wherein the groove (15) comprises a second step (22) formed by a steep decrease in outer diameter at a second distance from the second end (18), the second distance being so that the O-ring (14) can be retained in a compressed state between the second step (22) and the second end (18) of the groove (15).

6. Support liner (3) according to any of the preceding claims, when having a conical section (19), wherein the angle of inclination of the conical section (19) with respect to the longitudinal direction of the tubular part (12) is between 5° and 40°, such as between 5° and 20°, preferably between 5° and 10°.

7. Support liner (3) according to any of the preceding claims, wherein the protruding part (13) comprises a circumferential further groove (23) on an outer surface, the further groove (23) being adapted to have a further O-ring (24) arranged therein.

8. Support liner (3) according to any of the preceding claims, wherein an inner surface (25) of the support liner (3) is shaped so that an inner diameter of the support liner (3) first decreases and then increases when going from an end face (26) at the protruding part (13) towards an opposite end face (27) at the tubular part (12).

9. Support liner (3) according to any of the preceding claims, wherein it is made from metal, polymer or fibre reinforced polymer.

10. Method of establishing a fluid tight connection between a tube end (4) and a mechanical coupling device (5), the method comprising:
- providing a tube with a tube end (4) and a mechanical coupling device (5) to be connected,
- providing a support liner (3) according to any of the preceding claims,
- arranging an O-ring (14) in the first end (17) of the groove (15) of the support liner (3),
- inserting the support liner (3) into the tube end (4) so that the O-ring (14) is moved from the first end (17) to the second end (18) of the groove (15), and
- connecting the tube end (4) to the mechanical coupling device (15).

11. Method according to claim 10 when comprising using a support liner (3) according to claim 7, the method further comprising the step of arranging a further O-ring (24) in the further groove (23) before the connection is established.
